Europäisches Patentamt

European Patent Office

Office européen des brevets

(19)

(11) **EP 1 138 461 A2**

(12) **EUROPEAN PATENT APPLICATION**

(43) Date of publication:
**04.10.2001 Bulletin 2001/40**

(51) Int Cl.⁷: **B29C 47/32**, B29C 69/02

(21) Application number: **01107923.3**

(22) Date of filing: **28.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.03.2000 JP 2000088328**

(71) Applicant: **Kinugawa Rubber Industrial Co., Ltd.,
Chiba-shi, Chiba 263-0005 (JP)**

(72) Inventor: **Togami, Hiroshi,
Kinugawa Rubber Ind. Co., Ltd.
Chiba-shi, Chiba 263-0005 (JP)**

(74) Representative: **Grünecker, Kinkeldey,
Stockmair & Schwanhäusser Anwaltssozietät
Maximilianstrasse 58
80538 München (DE)**

(54) **Embossing roller for extrusion molding**

(57)     An embossing roller (30) comprises a cylindrical member which is rotatable about a center axis (35) thereof and has a concave cylindrical outer surface (34) formed with an emboss pattern. The concave cylindrical outer surface (34) includes a diametrically largest peripheral part (37) which is distant from the center axis (35) by a maximum radius (r1) of the cylindrical member and a diametrically smallest peripheral part (39) which is distant from the center axis (35) by a minimum radius (r2) of the cylindrical member. The cylindrical member is constructed to satisfy the following equations (1) and (2):

$$r2 \geq 30mm \qquad (1)$$

$$(r1 - r2)\,/r2 \leq 20\,\% \qquad (2)$$

wherein:

r1 : maximum radius of the cylindrical member
r2 : minimum radius of the cylindrical member

**FIG.1**

EP 1 138 461 A2

**Description**

BACKGROUND OF THE INVENTION

1. Field of the Invention

The present invention relates in general to an extruding molding for extruding a weather strip used in a motor vehicle as a sealing member, and more particularly to an embossing roller which is associated with an extruder to produce a raised/depressed pattern (viz., emboss pattern) on an outer surface of the weather strip continuously extruded from the extruder.

2. Description of the Related Art

In order to clarify the task of the present invention, some related arts of the present invention will be briefly described with reference to the drawings.

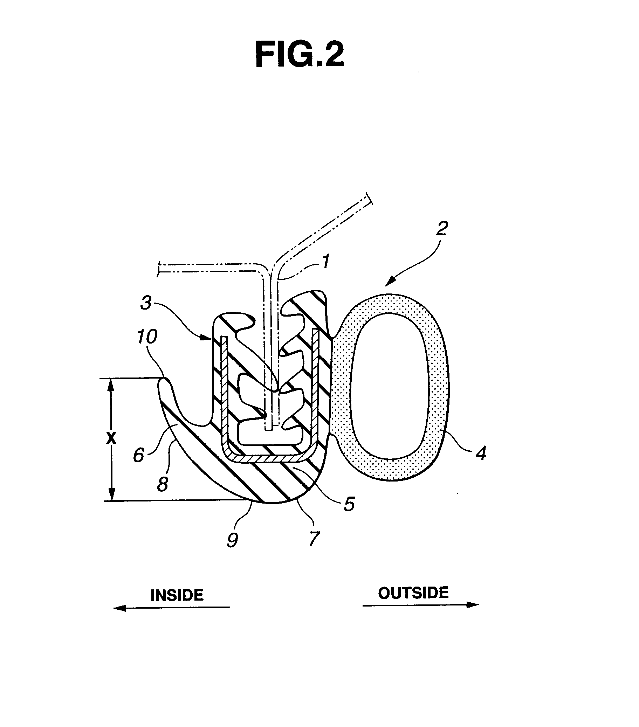

Referring to Fig. 2, there is shown a sectional view of a weather strip 2 fixed to a mated flange 1 projected downward from an upper portion of an automotive door opening (not shown). As shown, the weather strip 2 generally comprises a welt portion 3 which is generally U-shape in cross section and constructed of a solid rubber and a tubular portion 4 which is integrally connected to an outside part of the welt portion 3 and constructed of a sponge rubber. Upon closing of a door (not shown), the tubular portion 4 is compressed by the door thereby to perform a watertight sealing therebetween. A bottom wall 5 of the welt portion 3 is formed with a lip 6 which is projected obliquely upward, that is, toward a ceiling (not shown) of a passenger room. The bottom wall 5 and the lip 6 have respective convex outside surfaces 7 and 8 which are integrally joined to constitute a convexly curved surface, as shown. Denoted by reference "X" is a vertical distance between the lowermost part of the bottom wall 5 and a leading end 10 of the lip 6. Thus, the vertical distance "X" of the disclosed weather strip 2 is longer than that of a weather strip having no lip, by a degree corresponding a vertical length of the lip 6. That is, due to provision of the lip 6, the vertical distance "X", that is, the area of the convexly curved outer surface of the welt portion 3 is increased.

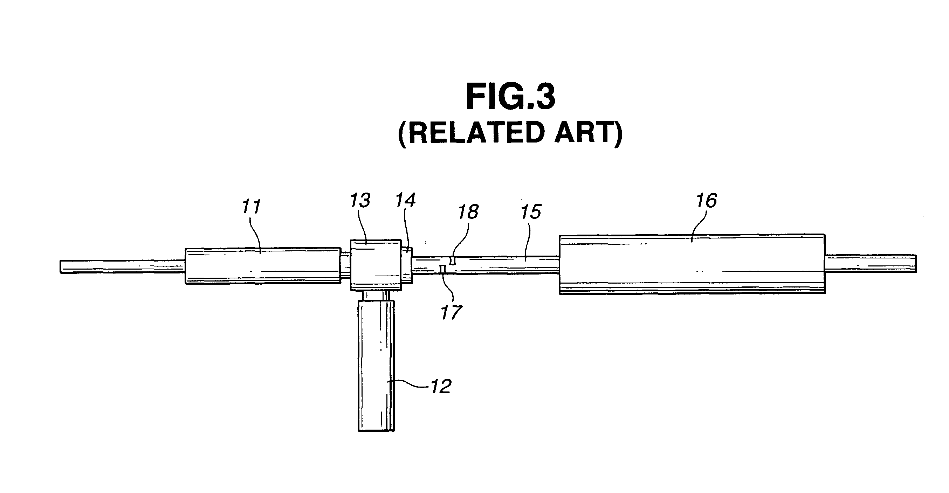

Referring to Fig. 3, there is schematically shown a manufacturing line for manufacturing the weather strip 2. As shown, both a first extruder 11 for a material of the solid rubber and a second extruder 12 for a material of the sponge rubber are connected to a head member 13. The head member 13 is equipped with a material extruding nozzle member 14 having an extruding opening of a given shape. That is, in operation, a non-cured continuous weather strip 15 is extruded from the material extruding nozzle member 14 and led into a curing tunnel 16 to be cured. In the illustrated example of the manufacturing line, two embossing rollers 17 and 18 are provided at positions just downstream of the material extruding nozzle member 14 to form an ornamental embossment on the outer surface of the non-cured continuous weather strip 15.

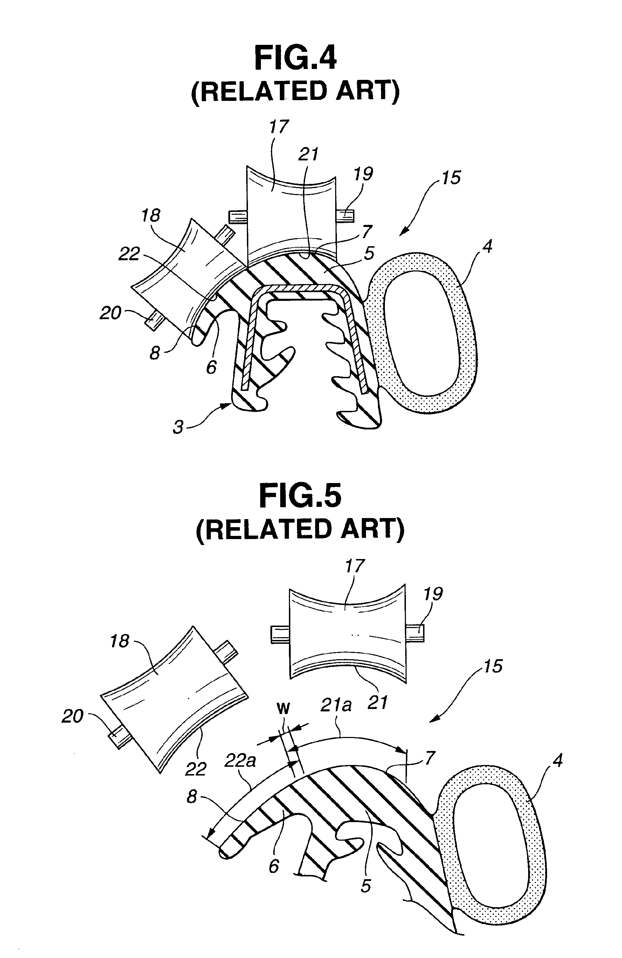

As is seen from Fig. 3, the two, that is, first and second embossing rollers 17 and 18 are arranged respectively on axially spaced positions of the way along which the non-cured continuous weather strip 15 runs, and as is seen from Fig. 4, the two embossing rollers 17 and 18 are arranged respectively on circumferentially spaced positions with respect to the way of the weather strip 15. As is seen from Fig. 4, each embossing roller 17 or 18 is rotatably held by a shaft 19 or 20.

Usually, the diameter of the maximally enlarged portion of the first or second embossing roller 17 or 18 is about 20mm to 30mm in diameter. More specifically, each embossing roller 17 or 18 is formed with a concave cylindrical outer surface 21 or 22 which is machined to have a raised/depressed pattern (viz., embossing pattern). The concave outer surface 21 of the first roller 17 is shaped to match with the convex outside surface 7 of the bottom wall 5 of the weather strip 2, and the concave outer surface 22 of the second roller 18 is shaped to match with the convex outside surface 8 of the lip 6 of the weather strip 2.

As is seen from Fig. 3, when the non-cured continuous weather strip 15 is extruded from the material extruding nozzle member 14, the convex outside surface 7 of the strip 15 is brought into contact with the concave outer surface 21 of the first roller 17, and then the convex outside surface 8 of the strip 15 is brought into contact with the concave outer surface 22 of the second roller 18. With this, suitable emboss patterns are formed on the outside surfaces 7 and 8 of the strip 15.

However, in the above-mentioned arrangement, as is seen from Fig. 5, in order to have the two emboss patterns, which are to be produced respectively by the first and second embossing rollers 17 and 18, joined on the outside surface of the strip 15, it is necessary to put the two embossing rollers 17 and 18 close to each other by such a degree that the two rollers 17 and 18 are somewhat overlapped by "W" in the circumferential direction relative to the way of the strip 15. However, the work for setting the two rollers 17 and 18 to such overlapped positions needs a skilled and time-consuming technique. Furthermore, if the setting is not adequately made, the two emboss patterns tend to have an unsightly jointed portion therebetween.

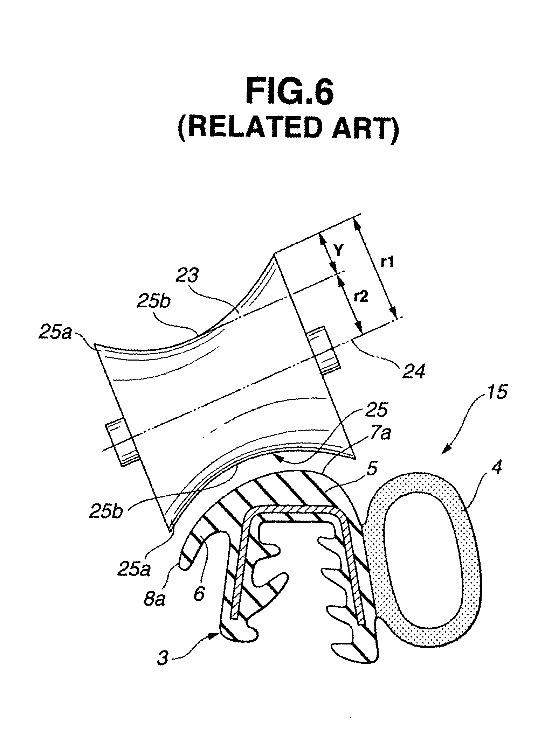

In view of the above, usage of a single embossing roller 23 may be thought out as is seen from Fig. 6. In this drawing, denoted by numeral 24 is a center axis of the roller 23. Denoted by 25a is a diametrically largest peripheral part of a concave cylindrical surface 25 of the roller 23, and denoted by 25b is a diametrically smallest peripheral part of the concave cylindrical surface 25 of the roller 23. Furthermore, denoted by "r1" is a distance (viz., maximum radius) between the diametrically largest peripheral part 25a and the axis 24 of the roller 23, and denoted by "r2" is a distance (viz., minimum radius) between the diametrically smallest peripheral part 25b and the axis 24 of the roller 23. Thus, the depth "Y" of the concave recess 25 of the outer surface of the roller 23 is represented by "(r1 - r2)".

In usage of the single embossing roller 23, if the non-cured continuous weather strip 15 is designed to have the vertical distance "X" (see Fig. 2) of for instance 6mm, the depth "Y" of the concave recess 25 of the roller 23 is set 6mm. In other words, the roller 23 has to have a remarkably sharp concave recess 25 thereon. However, it has been revealed that usage of the roller 23 having such a sharp concave recess 25 fails to provide the outside surface of the strip 15 with a satisfied emboss pattern. In fact, due to such sharp concave recess 25, the peripheral speed at the diametrically largest peripheral part 25a is too high as compared with that at the smallest peripheral part 25b, which causes incomplete embossing to an outer surface 8a of the lip 6 by the largest peripheral part 25a.

## SUMMARY OF THE INVENTION

It is therefore an object of the present invention to provide an embossing roller for use in an extrusion molding, which is free of the above-mentioned drawbacks.

According to a first aspect of the present invention, there is provided an embossing roller for producing an emboss pattern on an outer surface of a molded body continuously extruded from an extruder. The embossing roller comprises a cylindrical member which is rotatable about a center axis thereof and has a cylindrical outer surface formed with an embossing pattern, the cylindrical outer surface including a diametrically largest peripheral part which is distant from the center axis by a maximum radius (r1) of the cylindrical member and a diametrically smallest peripheral part which is distant from the center axis by a minimum radius (r2) of the cylindrical member, wherein the cylindrical member is constructed to satisfy the following equations (1) and (2):

$$r2 \geq 30 \text{ mm} \tag{1}$$

$$(r1 - r2)/r2 \leq 20 \% \tag{2}$$

wherein:

r1 : maximum radius of the cylindrical member
r2 : minimum radius of the cylindrical member

According to a second aspect of the present invention, there is provided a manufacturing line for manufacturing an automotive weather strip which comprises a welt portion having a U-shaped cross section and a lip portion projected from the welt portion, the welt portion and the lip portion having respective outer convex surfaces which are joined to constitute a given convex outer surface of the weather strip, the manufacturing line comprising an extruder having a material extruding nozzle member from which a non-cured continuous weather strip is extruded; a holding roller arranged in the way of the non-cured continuous weather strip to hold an inside surface of the lip portion of the weather strip during a longitudinal movement of the weather strip; and a single embossing roller arranged in the vicinity of the holding roller to produce an emboss pattern on the given convex outer surface of the weather strip with the aid of the holding roller, the embossing roller being rotatable about a center axis thereof and having a concave cylindrical outer surface formed with an embossing pattern, the concave cylindrical outer surface being in contact with the given convex outer surface of the weather strip and including a diametrically largest peripheral part which is distant from the center axis by a maximum radius (r1) of the cylindrical member and a diametrically smallest peripheral part which is distant from the center axis by a minimum radius (r2) of the cylindrical member, wherein the cylindrical member is constructed to satisfy the following equations (1) and (2):

$$r2 \geq 30 \text{ mm} \tag{1}$$

$$(r1 - r2)/r2 \leq 20 \% \tag{2}$$

wherein:

r1 : maximum radius of the cylindrical member
r2 : minimum radius of the cylindrical member

## BRIEF DESCRIPTION OF THE DRAWINGS

Other objects and advantages of the present invention will become apparent from the following description when taken in conjunction with accompanying drawings, in which:

Fig. 1 is a sectional view of an embossing roller of the present invention in a condition wherein the roller is practically applied to a non-cured continuous weather strip;
Fig. 2 is a sectional view of a weather strip fixed to a flange projected from an upper portion of an automotive door opening;
Fig. 3 is a schematic plan view of a manufacturing line for manufacturing a weather strip;
Fig. 4 is a sectional view of a non-cured continuous weather strip to which two embossing rollers of the related art are practically applied;
Fig. 5 is a view similar to Fig. 4, but showing a condition wherein the two embossing rollers of the related art are to be somewhat overlapped; and
Fig. 6 is a sectional view of a single embossing roller of the related art practically applied to a non-cured continuous weather strip.

## DETAILED DESCRIPTION OF THE INVENTION

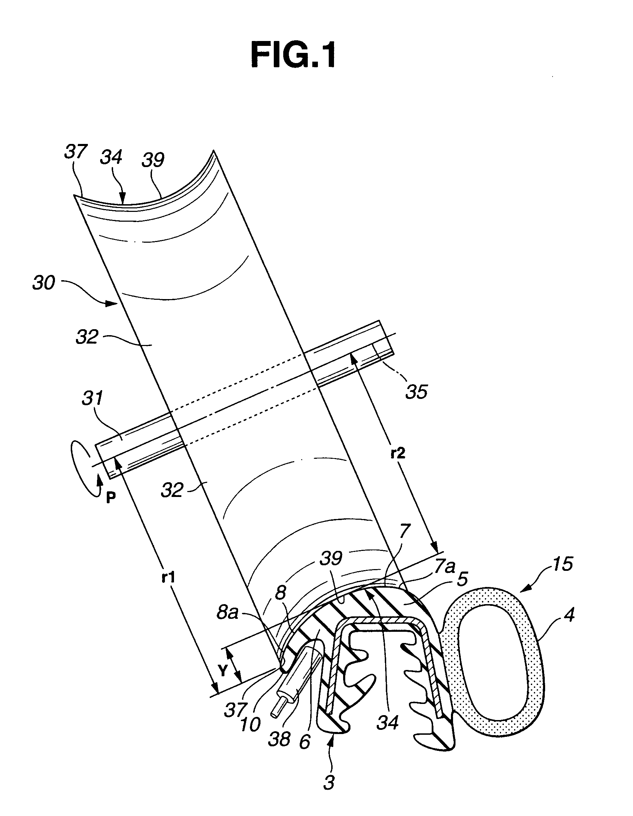

In the following, the present invention will be described in detail with reference to Fig. 1.

For ease of understanding, various directional terms, such as, right, left, upper, lower, rightward, leftward, etc., may be used in the following description. However, such terms are to be understood with respect to only a drawing or drawings on which the corresponding member or portion is shown.

In Fig. 1, denoted by numeral 30 is an embossing roller according to the present invention. Like in the above-mentioned embossing rollers 17, 18 and 23, the embossing roller 30 is arranged between the material extruding nozzle member 14 (see Fig. 3) and the curing tunnel 16 to provide a given part of the outer surface of a non-cured continuous weather strip 15 with an ornamental embossment.

As shown in Fig. 1, the embossing roller 30 is tightly held by a center shaft 31. Although not shown in the drawing, both ends of the center shaft 31 are rotatably held by respective bearing members. The embossing roller 30 is in the shape of a circular plate having opposed flat surfaces and has a concave cylindrical outer surface 34 which is machined to have a raised/depressed pattern (viz., embossing pattern). The concave outer surface 34 is shaped to match with the convexly curved surface constituted by the convex outside surfaces 7 and 8 of the strip 15.

Positioned below the embossing roller 30, there is arranged a holding roller 38 which serves as a pedestal for the embossing roller 30. That is, as is seen from this drawing, during embossing on the outer surface of the strip 15 by the embossing roller 30, the holding roller 38 holds an inside surface of the lip 6 to assure the embossing on the lip 6.

Denoted by 35 is an axis of the shaft 31 of the embossing roller 30. Denoted by 37 is a diametrically largest peripheral part of the concave outer surface 34 and denoted by the 39 is a diametrically smallest peripheral part of the concave outer surface 34. Furthermore, denoted by "r1" is a distance (viz., maximum radius) between the diametrically largest peripheral part 37 and the axis 35, and denoted by "r2" is a distance (viz., minimum radius) between the diametrically smallest peripheral part 39 and the and the axis 35. Thus, the depth "Y" of the concave recess 34 is represented by "(r1 - r2)".

As will become apparent as the description proceeds, in the present invention, the minimum radius "r2" is determined equal to or greater than 30mm and the depth "Y" of the concave recess 34 is determined equal to or smaller than 20% of the minimum radius "r2". Thus, when the minimum radius "r2" is 30mm, the "Y" of the concave recess 34 is should be smaller than 6mm.

In the disclosed embodiment of the present invention, the minimum radius "r2" is 60mm and the maximum radius "r1" is 66mm. In this case, the value of "Y" is calculated to 6 mm. From the equation "6/60 x 100", the value "Y" shows 10% of the minimum radius "r2".

When, in operation, a non-cured continuos weather strip 15 is extruded from the material extruding nozzle member 14, the convexly curved outside surface constituted by the two convex outside surfaces 7 and 8 of the strip 15 is brought into contact with the concave outer surface 34 of the embossing roller 30, and at the same time, the lip 6 of the strip 15 is intimately put into a clearance between the diametrically larger section of the concave outer surface 34 of the embossing roller 30 and the holding roller 38. With this, the embossing roller 30 and the holding roller 38 are forced to rotate in synchronization with the extrusion speed (or rate) of the strip 15. The rotation direction of the roller 30 is indicated by the arrow "P". The embossing pattern formed on the concave outer surface 34 of the embossing roller 30 is thus transferred to the convex outer surface (7 and 8) of the non-cured continuous weather strip 15. The strip 15 thus formed with the emboss pattern is then led to the curing tunnel 16 (see Fig. 3) for curing thereof.

It is now to be noted that, for the above-mentioned dimensions applied to the embossing roller 30, the rotation of the roller 30 is so made that the peripheral speed at the diametrically largest peripheral part 37 of the concave outer surface 34 shows a value higher than that at the diametrically smallest peripheral part 39 by 10%. That is, the peripheral speed rate of the largest peripheral part 37 relative to the smallest peripheral part 39 is 1.1.

In order to find out appropriate dimensions of the embossing roller 30 needed for producing satisfied emboss pattern on the strip 15, a test has been carried out by the inventor. For this test, five samples "A", "B", "C", "D" and "E" were prepared. As is seen from TABLE-1, these samples were different in size, but all of them had the same depth "Y" of 6mm. Using these samples, five weather strips were produced in substantially same manner as has been mentioned hereinabove. On each weather strip thus produced, clarity of the emboss pattern formed on the weather strip and commercial value of the weather strip were checked via visual examination. The results are shown in TABLE-1.

TABLE-1

| Sample No. | | A | B | C | D | E |
|---|---|---|---|---|---|---|
| Size of Roller (mm) | r1 | 26 | 30 | 36 | 46 | 66 |
| | r2 | 20 | 24 | 30 | 40 | 60 |
| Y/r2 (%) | | 30 | 25 | 20 | 15 | 10 |
| Speed Rate of D.L.P. | | 1.3 | 1.25 | 1.2 | 1.15 | 1.1 |
| Clarity of Embossing | | x | Δ | ○ | ○ | ◎ |
| Commercial Value | | x | x | ○ | ○ | ◎ |

As is seen from the table, in Sample "A", the maximum radius "r1" was 26mm, the minimum radius "r2" was 20mm, the ratio of "Y" relative to "r2" was 30% and the speed rate of the largest peripheral part 37 relative to the smallest peripheral part 39 was 1.30. In Sample "B", the maximum radius "r1" was 30mm, the minimum radius "r2" was 24mm, the ratio of "Y" relative to "r2" was 25% and the speed rate of the largest peripheral part 37 relative to the smallest peripheral part 39 was 1.25. In Sample "C", the maximum radius "r1" was 36mm, the minimum radius "r2" was 30mm, the ratio of "Y" relative to "r2" was 20% and the speed rate of the largest peripheral part 37 relative to the smallest peripheral part 39 was 1.20. In Sample "D", the maximum radius "r1" was 46mm, the minimum radius "r2" was 40mm, the ratio of "Y" relative to "r2" was 15% and the speed rate of the largest peripheral part 37 relative to the smallest peripheral part 39 was 1.15. In Sample "E", the maximum radius "r1" was 66mm, the minimum radius "r2" was 60mm, the ratio of "Y" relative to "r2" was 10% and the speed rate of the largest peripheral part 37 relative to the smallest peripheral part 39 was 1.10. The sample "E" is thus the same as the above-described embodiment shown in Fig. 1.

The clarity of the embossing was estimated according to the four-grade system, which includes "x" that represents that the embossing on the outer surface 8a of the lip 6 is quite poor, "Δ" that represents that the embossing on the outer surface 8a is poor, "○" that represents that the embossing is good and "◎" that represents that the embossing is excellent.

The commercial value of the weather strip was estimated according to the two-grade system, which includes "x" that represents that the commercial value is no good and "O" that represents that the commercial value is good.

As is seen from the table, in case of Samples "A" and "B", the clarity of the emboss pattern formed on the strip was poor and the commercial value of the strip was no good. While, in case of Samples "C", "D" and "E", the clarity of the emboss pattern on the strip was good and the commercial value of the strip was also good.

That is, according to the test, it has been revealed that if the embossing roller 30 is constructed to exhibit, as the speed rate of the largest peripheral part 37 relative to the smallest peripheral part 39, a value equal to or smaller than 1.2, a satisfied emboss pattern on the outer surface of the weather strip 2 can be expected. In other words, if the embossing roller 30 is constructed to exhibit, as "Y/r2", a value equal to or smaller than 20%, a satisfied emboss pattern is obtained. In view of the results of Sample "E", it is easily understood that the above-mentioned embossing roller 30 actually shown in Fig. 1 can exhibit a satisfied embossing work.

In the following, advantages of the present invention will be described.

First, as has been mentioned hereinabove, if the embossing roller 30 is constructed to satisfy the following relations (1) and (2), a satisfied emboss pattern is expected on the outer surface of the weather strip 2 by the roller 30.

$$r2 \geq 30 \text{ mm} \tag{1}$$

wherein:

r2 : minimum radius of the roller

$$Y / r2 \leq 20 \text{ \%} \tag{2}$$

wherein:

Y: r1 - r2
r1 : maximum radius of the roller
r2 : minimum radius of the roller

That is, when satisfying the equations (1) and (2), the speed difference produced between the diametrically largest peripheral part 37 of the concave outer surface 34 and the diametrically smallest peripheral part 39 of the surface 34 exerts substantially no influence on the embossing by the embossing roller 30.

Second, according to the present invention, there is no need of using two embossing rollers. That is, the above-mentioned drawbacks inevitably induced by usage of the two embossing rollers 17 and 18 (see Fig. 5) are eliminated in the invention.

Third, the concave outer surface 34 of the embossing roller 30 has the minimum radius "r2" that is not smaller than 30mm. This means that the roller 30 can have a longer (viz., longer than $2\pi$ x 30 mm) embossing area machined on the concave outer surface 34 thereof. Thus, various types of emboss patterns can be transferred to the outer surface of the weather strip 2 improving the aesthetic external view of the strip 2.

Although the invention has been described above with reference to the embodiment of the invention, the invention is not limited to such embodiment as described above. Various modifications and variations of such embodiment may be carried out by those skilled in the art, in light of the above description.

## Claims

1. An embossing roller for producing an emboss pattern on an outer surface of a molded body continuously extruded from an extruder, comprising:

   a cylindrical member which is rotatable about a center axis thereof and has a cylindrical outer surface formed with an embossing pattern, said cylindrical outer surface including a diametrically largest peripheral part which is distant from said center axis by a maximum radius (r1) of the cylindrical member and a diametrically smallest peripheral part which is distant from said center axis by a minimum radius (r2) of the cylindrical member, wherein said cylindrical member is constructed to satisfy the following equations (1) and (2):

$$r2 \geq 30 \text{ mm} \tag{1}$$

$$(r1 - r2)/r2 \leq 20 \text{ \%} \tag{2}$$

   wherein:

   r1 : maximum radius of the cylindrical member
   r2 : minimum radius of the cylindrical member

2. An embossing roller as claimed in Claim 1, in which the cylindrical outer surface of said cylindrical member is concave in shape.

3. An embossing roller as claimed in Claim 2, further comprising a center shaft by which said cylindrical member is tightly held, said center shaft having said center axis extending therealong.

4. An embossing roller as claimed in Claim 3, in which said cylindrical member is formed with opposed flat surfaces.

5. A manufacturing line for manufacturing an automotive weather strip which comprises a welt portion having a U-shaped cross section and a lip portion projected from said welt portion, said welt portion and said lip portion having respective outer convex surfaces which are joined to constitute a given convex outer surface of said weather strip, said manufacturing line comprising:

an extruder having a material extruding nozzle member from which a non-cured continuous weather strip is extruded;
a holding roller arranged in the way of said non-cured continuous weather strip to hold an inside surface of said lip portion of the weather strip during a longitudinal movement of said weather strip; and
a single embossing roller arranged in the vicinity of said holding roller to produce an emboss pattern on said given convex outer surface of said weather strip with the aid of said holding roller, said embossing roller being rotatable about a center axis thereof and having a concave cylindrical outer surface formed with an embossing pattern, said concave cylindrical outer surface being in contact with said given convex outer surface of said weather strip and including a diametrically largest peripheral part which is distant from said center axis by a maximum radius (r1) of the cylindrical member and a diametrically smallest peripheral part which is distant from said center axis by a minimum radius (r2) of the cylindrical member,
wherein said cylindrical member is constructed to satisfy the following equations (1) and (2):

$$r2 \geq 30 \text{ mm} \tag{1}$$

$$(r1 - r2)/r2 \leq 20 \% \tag{2}$$

wherein:

r1 : maximum radius of the cylindrical member
r2 : minimum radius of the cylindrical member

6. A manufacturing line as claimed in Claim 5, further comprising a curing device which is arranged downstream of said extruder to cure said non-cured continuous weather strip.

# FIG.1

# FIG.2

INSIDE

OUTSIDE

# FIG.3
## (RELATED ART)

# FIG.4
## (RELATED ART)

# FIG.5
## (RELATED ART)

# FIG.6
## (RELATED ART)